# EUROPEAN PATENT SPECIFICATION

(11) **EP 0 830 967 B1**
(45) Date of publication and mention of the grant of the patent: **11.04.2001**
(21) Application number: 97115788.8
(22) Date of filing: 11.09.1997
(51) Int. Cl.: B60K 37/00, B62D 25/14

(54) **A motor vehicle dashboard**
Kraftfahrzeug- Armaturenbrett
Planche de bord de véhicule automobile

(30) Priority: 19.09.1996 IT TO960759; 19.09.1996 IT TO960190 U
(43) Date of publication of application: 25.03.1998
(73) Proprietor: FIAT AUTO S.p.A., 10135 Torino (IT)
(72) Inventor: Giolito, Roberto, 10128 Torino (IT)
(74) Representative: Di Francesco, Gianni

(56) References cited:
- EP-A- 0 713 798
- FR-A- 1 538 449
- FR-A- 2 710 018
- US-A- 5 333 901

## Description

The present invention relates generally to motor vehicle dashboards, and more particularly to a dashboard for a motor vehicle for transporting passengers, of the kind comprising controls for driving the vehicle, controlling the engine and other on-board equipment, including the air inlet plant.

Modern motor vehicles are generally fitted with safety systems such as collapsible steering wheels, air bag for the front seat passenger, on-board computer or other apparatuses for improving comfort during the journey. These devices are added to those already existing and which are indispensable for the operation of the vehicle, such as motor operation check panels and electronic processing units for controlling an anti-sliding system. The control devices for some of these electric controls, for example the windscreen wiper intermittence control, are located underneath the dashboard in a special housing fixed to the dashboard or the wall separating the passenger's cabin from the motor compartment.

To this end, recesses are provided which, besides allowing accommodation of such apparatuses, also serve to hide them from the passengers. Obviously this provision causes some problems of room in fitting the still increasing number of devices being implemented. A difficulty also arises in reaching such devices when they have to be repaired or removed. The dashboard often has to be disassembled to carry out such operations. When mounted again, the dashboard is likely to give out creaking noises when the vehicle is running, which should be avoided as it is bothersome for the passengers.

Moreover, disassembly and re-assembly of the dashboard generally require rather a long time. Therefore, once the repair is made, the owner will have to bear considerable costs for the intervention.

On the other hand, the provision of special recesses within the dashboard and closed by removable or openable lids requires the use of plastic materials of good quality, and therefore expensive, in order to prevent the lids from ending up to be deformed over time because of temperature variations, producing bothersome noises and turning up in having a definitely negative aspect. Finally, fitting all the instruments on the dashboard at separate locations and connecting them to the corresponding apparatuses, such as connecting the air inlets to the relevant channels requires an expenditure of time during assembly.

It is a primary object of the present invention to provide a motor vehicle dashboard that, to overcome the above discussed disadvantages and limitations of the prior art, can be disassembled in an easy and quick manner and provides good accessibility to the various devices fitted within it, while maintaining a pleasant aspect over time and being of extremely low manufacturing and assembly costs.

A further object of this invention is to provide a motor vehicle dashboard having such features as to be interchangeable with other dashboards having different functions and fittings.

The above and other objects are achieved in accordance with the present invention by a motor vehicle dashboard as defined in appended claim 1. According to a further advantageous feature of this invention, also the removable lids of the dashboard are shaped as a basin in order to act as object-holders.

Further advantages and features of the present invention will become apparent to those skilled in the art from a study of the following description of a few exemplary preferred but not limiting embodiments when read in conjunction with the attached drawings, in which:

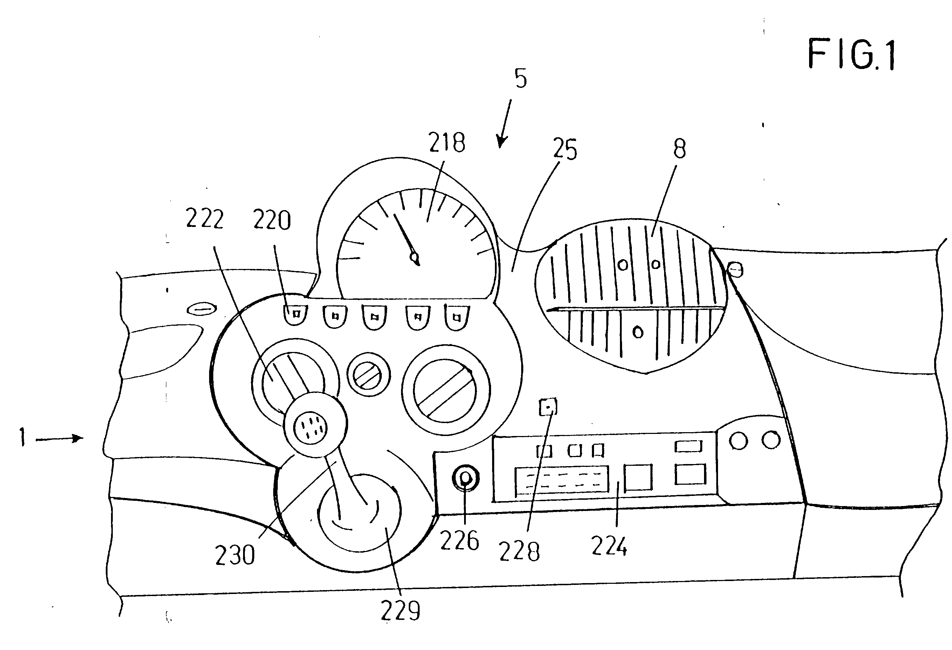

- FIG. 1: is a central, partial view of a dashboard according to the present invention;

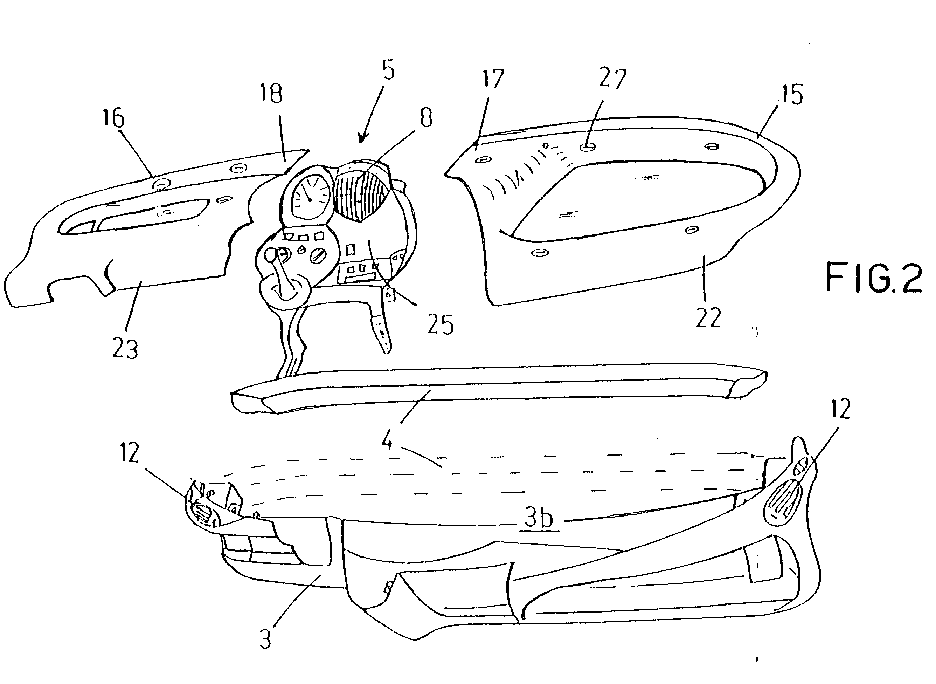

- FIG. 2: is a perspective exploded view of a dashboard according to this invention; and
- FIGS. 3 to 7: show some variant embodiments of the dashboard of FIG. 1.

Referring to the drawings, reference numeral 1 designates a motor vehicle dashboard, particularly for a motorcar with at least two flanked front seats and that can accommodate a third passenger in the middle of the passenger compartment, between the driver's seat and the front passenger's seat. With such a kind of vehicle, a conventional gear control, normally fixed on the vehicle floor at a central location advanced with respect to the front seats, would be in the way of the passenger sitting in the third, central front seat. Therefore, the gear control is to be fitted higher up, on the steering column or the dashboard, as in recent vans. The motor vehicle dashboard of this invention is formed by a sustaining base or structure 3 fixed in known manner to the front cross member 4 of the vehicle body located underneath the vehicle windshield.

With the front cross member 4, the base 3 forms a basin-like shape with an upwardly directed inner compartment 3b. Said compartment 3b is interrupted in its central portion by a compact assembly 5 comprising the vehicle control instrumentation and the air inlets 8 of the central part of the vehicle. The base 3 is adapted for receiving within it most of the apparatuses for controlling the operation of the vehicle and also the ducts supplying air to the central inlets 8 and further inlets 12 located on the sides of the base.

The dashboard base 3 is covered by at least two removable lids 15, 16 which, in the illustrated embodiment, have central tongues 17, 18 that extend to join behind the assembly 5. In accordance with this invention, said lids are made of a substantially semi-rigid material, preferably of a plastic material. Further tongues 22, 23 on the front part of the lids extend downwards (towards the vehicle floor) so as to cover and hide the edge of the base 3 on which they rest. A shell 25 is provided for covering the assembly 5. Shell 25 is radiused to the contour of said lids fixed in position. The outer surface of the shell will be aesthetically pleasant as it forms part of the vehicle dashboard. Obviously, shell 25 may also be integrated with one of the two lids, in case it is desired to achieve a different aesthetic effect. The two lids 15, 16 are shaped as basins, which allows to provide an object-holder easy to reach for by passengers sitting in the front seats. The lids are fixed to the base 3 with an interposed antifriction and noise-dampening material of known kind by conventional quick fastening means 27 that can be opened quickly to remove the lid when necessary. In an alternative embodiment, one of the lids and preferably the one 15 on the right far from the vehicle steering wheel may have an opening with a door (not shown) so as to have access to the compartment underneath without removing the whole lid.

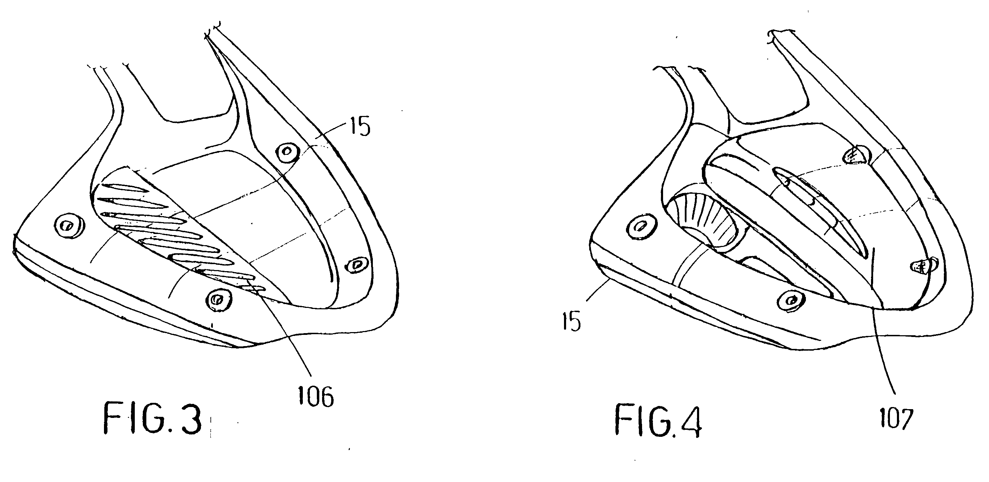

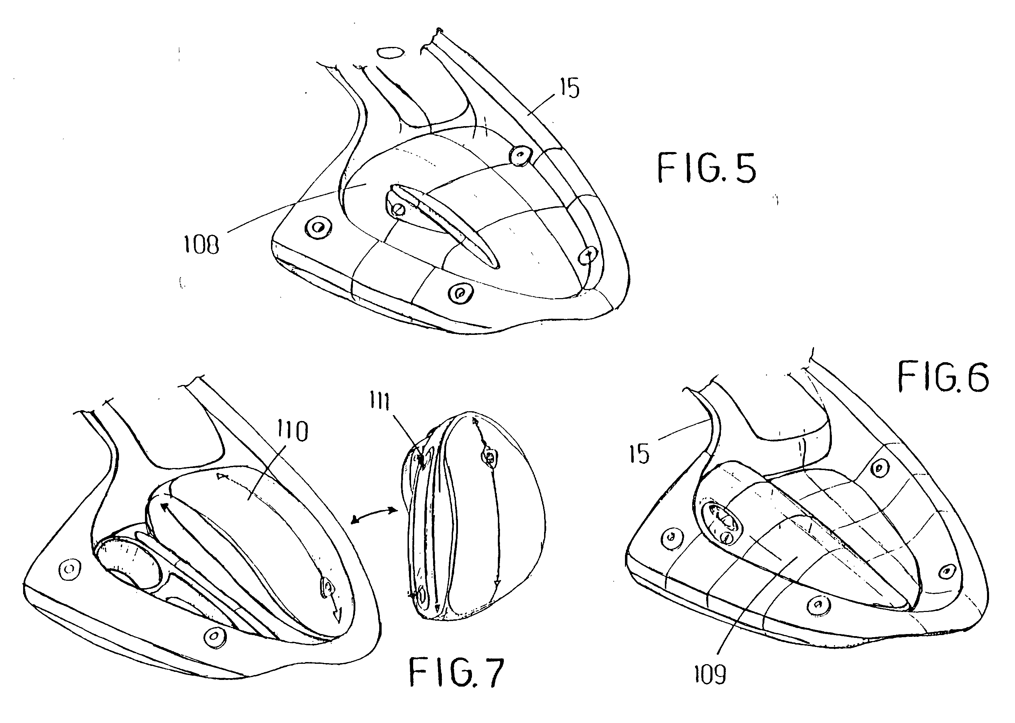

Referring now particularly to FIGS. 3 to 7, according to the client's requirements, the right lid 15 can be provided with several different fittings so as to render it adapt to different uses. For example, the lid can be provided with a diskette holder 106 (FIG. 3), or compartments closed by doors 107, 108, 109 of different kind (FIGS. 4, 5 and 6, respectively). In FIG. 7 there is illustrated a lid 15 to which a soft handbag 110 is anchored by means of pins 111, from which the handbag can be released and carried away.

Obviously, the upper part of the lids 15 and 16 will be particularly well finished paying special attention to aesthetic aspects, and so it may e.g. be covered by a suitable fabric through a co-moulding step or similar. Alternatively, according to the expensiveness of the motor vehicle model, the tops of the lids may be coated by leather or a layer of softer plastic, more pleasant to touch.

In accordance with this invention, said assembly 5 comprises a mileometer-speed indicator 218 and a number of buttons and indicators 220, connected to corresponding on-board devices such as, for example, headlight switches, rear window defrosting switches, etc.. Further, controls 222 are provided for controlling the air supply within the passenger compartment through the air inlets 8 forming part of assembly 5. In said control assembly there are also fitted other on-board accessories, such as a radio 224, a lighter 226, an emergency flash-light button 228 and optionally other known controls.

Also the gear control device 229, with the gear lever 230, forms part of the control assembly 5. The gear control device 229, that is per se known and already present on commercially available vehicles, is not herein described in detail.

The control assembly 5, as illustrated in the attached drawings or with further known controls not shown, is premounted in parallel with the assembly line. In this manner the overall assembly time can so be reduced by mounting the control assembly as a unit on the vehicle; after that, only the appropriate connections of the relevant instruments are left to be completed.

The objects of the invention are attained by a dashboard as described herein above.

## Claims

1. A dashboard for a motor vehicle, particularly a motor car, composed of a sustaining base (3) connected to a part of the vehicle body (4) and forming a basin-shape contour therewith, the dashboard having an instrumentation centrally grouped in a control assembly (5), the top of said contour being closed by removable covering means made of a substantially semi-rigid plastic material and having quick coupling means (27) for quick fastening to and releasing from said sustaining base, characterised in that said covering means consist of at least two separate lids (15, 16) of basin-like shape connected to each other at the centre of said dashboard behind said control assembly (5).

2. A dashboard as claimed in claim 1, characterised in that each of said two lids (15, 16) is individually removable form said sustaining base (3).

3. A dashboard as claimed in claim 1, characterised in that said two removable lids (15, 16) have tongues (18, 19, 22, 23) adapted to cover the points of attachment of the lids to the base (3).

4. A dashboard as claimed in claim 1, characterised in that at least one of the two lids (15, 16) provides an aperture closed by a door.

5. A dashboard as claimed in claim 1, characterised in that in the basin-like portion of at least one of the lids (15, 16) there are formed compartments closed by doors (107, 108, 109).

6. A dashboard as claimed in claim 1, characterised in that in the basin-like portion of at least one of the lids (15, 16) there is fitted a removable handbag (110).

7. A dashboard as claimed in claim 1, characterised in that in the basin-like portion of at least one of the lids (15, 16) there is fitted a removable diskette holder (106).

8. A dashboard as claimed in claim 1, characterised in that said control assembly (5) is provided with a shell (25) having edges that follow the contour of said two separate lids (15, 16).

9. A dashboard as claimed in claim 1, characterised in that said control assembly (5) can be pre-assembled.

10. A dashboard as claimed in claim 1, characterised in that said control assembly (5) further comprises the gear control device (229).

## Patentansprüche

1. Kraftfahrzeugarmaturenbrett, insbesondere für ein Automobil, das ein tragendes Grundelement (3) umfaßt, das mit einem Teil der Fahrzeugkarosserie (4) verbunden ist und ebendort damit eine beckenartige Kontur ausbildet, wobei das Armaturenbrett eine Instrumentierung aufweist, die zentral in einem Steuerungsbauteil (5) gruppiert ist, wobei die Oberseite der Kontur durch entfernbare Abdeckungsmittel abgeschlossen ist, die aus einem im wesentlichen halbsteifen Kunststoffmaterial hergestellt sind und Schnellkupplungsmittel (27) zur schnellen Befestigung an und schnellen Lösung von dem tragenden Grundelement aufweisen, dadurch gekennzeichnet, daß die Abdeckungsmittel aus zumindest zwei getrennten Deckeln (15, 16) von beckenartiger Form bestehen, die miteinander in der Mitte des Armaturenbretts hinter dem Steuerungsbauteil (5) verbunden sind.

2. Armaturenbrett nach Anspruch 1, dadurch gekennzeichnet, daß jeder der zwei Deckel (15, 16) von dem tragenden Grundelement (3) einzeln abnehmbar ist.

3. Armaturenbrett nach Anspruch 1, dadurch gekennzeichnet, daß zwei abnehmbare Deckel (15, 16) Zungenfortsätze (18, 19, 22, 23) aufweisen, die so gestaltet sind, um die Befestigungspunkte der Deckel am Grundelement (3) abzudecken.

4. Armaturenbrett nach Anspruch 1, dadurch gekennzeichnet, daß zumindest einer der zwei Deckel (15, 16) eine Öffnung bereitstellt, die durch eine Türklappe verschlossen ist.

5. Armaturenbrett nach Anspruch 1, dadurch gekennzeichnet, daß in dem beckenartigen Abschnitt zumindest eines der Deckel (15, 16) Fächer ausgebildet sind, die durch Türklappen (107, 108, 109) abgeschlossen werden.

6. Armaturenbrett nach Anspruch 1, dadurch gekennzeichnet, daß in dem beckenartigen Abschnitt zumindest eines der Deckel (15, 16) ein entfernbarer Handbeutel (110) eingepaßt ist.

7. Armaturenbrett nach Anspruch 1, dadurch gekennzeichnet, daß in dem beckenartigen Abschnitt zumindest eines der Deckel (15, 16) ein entfernbarer Diskettenhalter (106) eingepaßt ist.

8. Armaturenbrett nach Anspruch 1, dadurch gekennzeichnet, daß der Steuerungsbauteil (5) mit einer Abdeckung (25) ausgestattet ist, die Kanten aufweist, die der Kontur der zwei getrennten Deckel (15, 16) folgen.

9. Armaturenbrett nach Anspruch 1, dadurch gekennzeichnet, daß der Steuerungsbauteil (5) vormontiert werden kann.

10. Armaturenbrett nach Anspruch 1, dadurch gekennzeichnet, daß der Steuerungsbauteil (5) des weiteren die Gangschaltvorrichtung (229) umfaßt.

## Revendications

1. Planche de bord pour un véhicule à moteur, en particulier une automobile, constitué d'une base de soutien (3) reliée à une partie de la caisse du véhicule (4) et définissant avec celle-ci un profil en forme de cuvette, la planche de bord comportant une instrumentation groupée de façon centrale dans un ensemble de commande (5), le dessus dudit profil étant refermé par un moyen de couverture amovible fait de matière plastique essentiellement semi-rigide et présentant un moyen d'accouplement rapide (27) destiné à fixer et libérer soutien ladite base de soutien, caractérisée en ce que ledit moyen de couverture est constitué d'au moins deux couvercles séparés (15, 16) en forme de cuvette, qui sont reliés l'un à l'autre au centre de ladite planche de bord en arrière dudit ensemble de commande (5).

2. Planche de bord selon la revendication 1, caractérisée en ce que chacun desdits deux couvercles (15, 16) peut être enlevé individuellement de ladite base de maintien (3).

3. Planche de bord selon la revendication 1, caractérisée en ce que lesdits deux couvercles amovibles (15, 16) présentent des languettes (18, 19, 22, 23) conçues pour recouvrir les points de fixation des couvercles à la base (3).

4. Planche de bord selon la revendication 1, caractérisée en ce qu'au moins l'un des deux couvercles (15, 16) procure une ouverture fermée par un volet.

5. Planche de bord selon la revendication 1, caractérisée en ce que dans la partie en forme de cuvette d'au moins l'un des couvercles (15, 16), sont formés des compartiments fermés par des volets (107, 108, 109).

6. Planche de bord selon la revendication 1, caractérisée en ce que dans la partie en forme de cuvette d'au moins l'un des couvercles (15, 16), est adapté un sac à main amovible (110).

7. Planche de bord selon la revendication 1, caractérisée en ce que dans la partie en forme de cuvette d'au moins l'un des couvercles (15, 16), est adapté un support de disquettes amovible (106).

8. Planche de bord selon la revendication 1, caractérisée en ce que ledit ensemble de commande (5) est muni d'une coque (25) ayant des bords qui suivent le profil desdits deux couvercles séparés (15, 16).

9. Planche de bord selon la revendication 1, caractérisée en ce que ledit ensemble de commande (5) peut être préassemblé.

10. Planche de bord selon la revendication 1, caractérisée en ce que ledit ensemble de commande (5) comprend en outre le dispositif de commande de vitesses (229).
